**Europäisches Patentamt**

**European Patent Office**

**Office européen des brevets**

(19)

(11) Veröffentlichungsnummer: **0 038 072**
**B1**

(12) **EUROPÄISCHE PATENTSCHRIFT**

(45) Veröffentlichungstag der Patentschrift:
20.03.85

(51) Int. Cl.⁴: **C 04 B 37/02, F 16 C 33/24**

(21) Anmeldenummer: 81102841.4

(22) Anmeldetag: 14.04.81

(54) Metall-Keramik-Bauteil und Verfahren zu seiner Herstellung.

(30) Priorität: 16.04.80 DE 3014645

(43) Veröffentlichungstag der Anmeldung:
21.10.81 Patentblatt 81/42

(45) Bekanntmachung des Hinweises auf die Patenterteilung:
20.03.85 Patentblatt 85/12

(84) Benannte Vertragsstaaten:
AT CH DE FR GB LI NL SE

(56) Entgegenhaltungen:
AT - B - 264 360
DE - A - 1 575 457
DE - A - 2 055 657
DE - A - 2 715 290
DE - B - 1 030 756

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Strasser, Franz, Ing. grad., Zeppelinstrasse 1, D-8069 Jetzendorf/Ilm-Priel-Ost (DE)**
Erfinder: **Steinhauser, Ludwig, Ing. grad., Karlstrasse 11, D-8031 Maisach (DE)**
Erfinder: **Kugenbuch, Bernd, Ing. grad., Hauptstrasse 21, D-8081 Adelshofen/NAS (DE)**

## Beschreibung

Die Erfindung bezieht sich auf ein Metall-Keramik-Bauteil, bestehend aus einem Metallkörper und einem Keramikkörper, zwischen die ein Metallfilz eingesetzt und an den Grenzflächen jeweils mit dem Metallkörper und mit dem Keramikkörper unlösbar verbunden ist, wobei die Verbindung zum Metallkörper eine Lötverbindung ist.

Wegen der bekannten spezifischen Materialeigenschaften von Keramik (z.B. $Al_2O_3$, reaktionsgebundenes oder heissgepresstes $Si_3N_4$ oder SiC) besteht ganz allgemein der Wunsch, thermisch hochbelastete Bauteile ganz oder teilweise aus Keramik herzustellen. Dabei ergibt sich jedoch häufig die Forderung einer dauerhaften Verbindung zwischen Keramik und Metallbauteilen. Bisher bekannt gewordene Verbindungsarten sind Schrumpfverbindungen oder Klebeverbindungen. Wegen der sehr unterschiedlichen Materialeigenschaften von Keramik und Metall, insbesondere wegen des um Grössenordnungen unterschiedlichen Wärmeausdehnungskoeffizienten hat sich gezeigt, dass die bisher bekannten Verbindungen, die aufgrund der unterschiedlichen Wärmeausdehnungskoeffizienten auftretenden Spannungen nicht aushalten und demnach keine ausreichende Standfestigkeit aufweisen.

Zur Lösung der vorstehend aufgezeigten Probleme ist es aus der DE-A-2 715 290 bekannt, eine Metall-Keramik-Verbindung der eingangs genannten Kategorie zu schaffen. Bei dieser Ausbildung eines Metall-Keramik-Bauteils werden die unterschiedlichen Wärmedehnungen zwischen Metallkörper einerseits und Keramikkörper andererseits durch das dazwischenliegende Metallgewebe ausgeglichen. Ein entscheidendes Problem solcher Verbundbauteile besteht jedoch darin, dass das Metallgewebe nur schwer mit dem Keramikkörper verbindbar ist. Die vorstehend genannte Druckschrift bietet als Lösung für diese Verbindung entweder ein Aufspritzen des Keramikmaterials auf freistehende Enden des Metallgewebes an, oder wie in Fig. 3 dieser Druckschrift dargestellt, das Einbringen von Metallhaken in die Oberfläche des Keramikkörpers bei dessen Herstellung, wodurch dann der Keramikkörper zumindest teilweise an seiner Verbindungsfläche Metallschichten aufweist, die durch Lötung mit dem Metallgewebe verbindbar sind. Die erstere Alternative erlaubt es nicht, einen in seiner äusseren Kontur fertigen Keramikkörper mit dem Metallgewebe zu verbinden, da der Keramikkörper erst beim Aufspritzen bzw. anderweitigem Aufformen der Keramikmasse auf das Metallgewebe entsteht. Die letztere Alternative ist nicht nur herstellungstechnisch aufwendig, indem die Metallhaken in die Keramikoberfläche eingebracht werden müssen, sondern auch, was die Festigkeit der Verbindung zwischen Keramikkörper und Metallgewebe anlangt, nur von geringer Qualität, da nur ein vergleichsweise geringer Bruchteil der Verbindungsfläche des Keramikkörpers für die Herstellung einer Lötverbindung zum Metallgewebe zur Verfügung steht. Aus diesem Grund können mit dem vorbezeichneten Verbindungsverfahren nur solche Metall-Keramik-Bauteile hergestellt werden, an die geringe Anforderungen bezüglich der zu übertragenden Momente oder Stützkräfte gestellt sind.

Aus der DE-B-1 030 756 ist zwar ein Verfahren zum Verbinden von Keramik mit einem Metallteil durch Lötung bekannt, bei dem das Metallteil mit Hilfe einer titanhaltigen Lötlegierung unmittelbar auf die Keramikoberfläche aufgelötet wird. Dieses Verfahren lässt sich jedoch nur dann verwirklichen, wenn das Metallteil im Bereich der Lötverbindung eine so geringe Wandstärke aufweist, dass die auftretenden unterschiedlichen Wärmedehnungen zu einer Deformation des Metallteils im Bereich der Verbindungsstelle führen können (vergleiche Spalte 3, Zeile 15 bis Spalte 4, Zeile 6). Einen Hinweis auf die Verbindung eines tragenden Metallkörpers mit einem Keramikkörper durch die Lötung kann diese Druckschrift nicht geben.

Aufgabe der vorliegenden Erfindung ist deshalb, ein Metall-Keramik-Bauteil der gattungsgemässen Art zu schaffen, bei dem eine sichere dauerhafte Verbindung zwischen Metall und Keramik besteht.

Zur Lösung dieser Aufgabe wird erfindungsgemäss vorgeschlagen, dass sowohl der Metallkörper als auch der Keramikkörper vorgefertigte, Eigensteifigkeit aufweisende Bauteile sind und zwischen Metallfilz und der gesamten, dem Metallfilz zugewandten Fläche des Keramikkörpers eine Lötverbindung besteht, deren Lot mit dem Keramikwerkstoff eine chemische Verbindung eingegangen ist (Aktiv-Lot).

Die erfindungsgemässe Ausbildung eines Metall-Keramik-Bauteils löst die gestellte Aufgabe und hat darüber hinaus den Vorteil, dass sowohl der Metallkörper als auch der Keramikkörper vor ihrer Verbindung durch Verlötung mit dem Metallfilz ihre endgültige Kontur aufweisen können. Bezüglich der Gestaltung dieser Kontur, insbesondere der Wandstärke sind keine Beschränkungen notwendig. Aus diesem Grund ist die erfindungsgemässe Ausbildung eines Metall-Keramik-Bauteils besonders vorteilhaft für die Gestaltung einer Wellennabenverbindung oder eines Keramiklagers anzuwenden, da beide Anwendungsfälle im wesentlichen einen äusseren metallischen Trägerring und einen inneren keramischen Ringkörper aufweisen.

In weiterer Ausgestaltung der Erfindung wird vorgeschlagen, dass der Metallfilzring in einer Querschnittsebene gleichmässig über seinen Umfang verteilte Durchbrechungen aufweist, in die pfropfenartig Metallfilz von erheblich höherer Steifigkeit eingesetzt ist. Diese Gestaltung eignet sich besonders zur Anwendung bei einem Kippsegmentlager.

Als Werkstoff für den Metallfilz hat sich X 15 CrNi Si 2520 als besonders vorteilhaft erwiesen. Es können jedoch auch Werkstoffe der USA-Normbezeichnung SS 309 oder SS 316 oder der hinlänglich bekannte Werkstoff Inconel® X 750 als Metallfilz Verwendung finden.

In den Zeichnungen sind Ausführungsbeispiele erfindungsgemäss ausgebildeter Metall-Keramik-Bauteile dargestellt. In den Zeichnungen zeigt:

Fig. 1 ein Keramiksegmentlager im Querschnitt und Längsschnitt und

Fig. 2 ein Keramiksegmentlager mit Kippfunktion in Querschnitt und Längsschnitt.

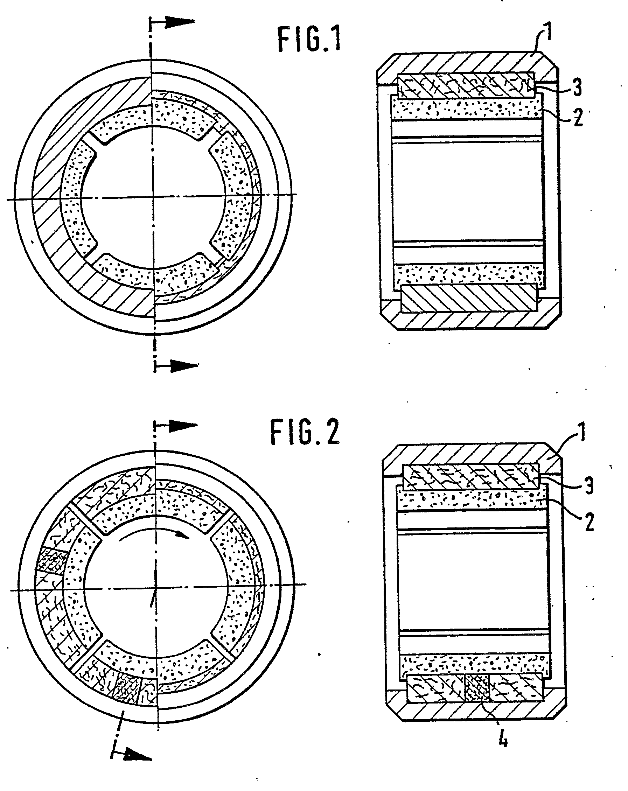

In Fig. 1 ist ein äusserer Metallring mit 1 bezeichnet, ein innerer Lagerring, der aus Keramikmaterial besteht, mit 2. Zwischen dem Metallring 1 und dem Lagerring 2 ist ein Ring aus Metallfilz 3 eingefügt. Der Metallfilzring 3 ist an seiner gesamten Aussenumfangsfläche mit dem Metallring 1 verlötet, an seiner gesamten Innenumfangsfläche mit dem Lagerring 2. Im gezeichneten Ausführungsbeispiel besteht der Lagerring 2 aus vier einzelnen Segmenten (vergleiche den Querschnitt). Es könnte jedoch auch ein einteiliger Lagerring zur Anwendung kommen.

Bei dem Keramiksegmentlager nach Fig. 2 handelt es sich um ein sogenanntes Kippsegmentlager. Dieses Lager ist im wesentlichen gleich aufgebaut wie das Lager gemäss Fig. 1, nämlich mit einem äusseren Metallring 1, einem Metallfilzring 3 und einem innerten Lagerring 2 aus Keramik. Bei diesem Ausführungsbeispiel sind sowohl der keramische Lagerring 2 als auch der Metallfilzring 3 mehrteilig ausgebildet, d.h. die Ringe bestehen jeweils aus vier Segmenten (vergleiche den Querschnitt). Die Kippfunktion des Lagers wird dadurch erzielt, dass in einer Querschnittsebene gleichmässig über den Umfang verteilt, im Metallfilzring 3 vier Durchbrechungen vorgesehen sind, in die pfropfenartig Metallfilz 4 von erheblich höherer Festigkeit, als sie der Metallfilzring 3 aufweist, eingesetzt ist. Dadurch entsteht eine Kippebene, gegen die eine im Lagerring gelagerte Welle oder ein Bolzen begrenzt schwenkbar ist.

## Patentansprüche

1. Metall-Keramik-Bauteil, bestehend aus einem Metallkörper und einem Keramikkörper, zwischen die ein Metallfilz eingesetzt und an den Grenzflächen jeweils mit dem Metallkörper und mit dem Keramikkörper unlösbar verbunden ist, wobei die Verbindung zum Metallkörper eine Lötverbindung ist, dadurch gekennzeichnet, dass sowohl der Metallkörper als auch der Keramikkörper vorgefertigte, Eigensteifigkeit aufweisende Bauteile sind und zwischen Metallfilz und der gesamten, dem Metallfilz zugewandten Fläche des Keramikkörpers eine Lötverbindung besteht, deren Lot mit dem Keramikwerkstoff eine chemische Verbindung eingegangen ist (Aktiv-Lot).

2. Metall-Keramik-Bauteil nach Anspruch 1, dadurch gekennzeichnet, dass es rotationssymmetrische Form aufweist und vorzugsweise als Keramiksegmentlager oder als Wellennabenverbindung ausgebildet ist.

3. Keramik-Segmentlager nach Anspruch 2, dadurch gekennzeichnet, dass der Metallfilzring in einer Querschnittsebene gleichmässig über seinen Umfang verteilte Durchbrechungen aufweist, in die pfropfenartig Metallfilz von erheblich höherer Steifigkeit eingesetzt ist.

4. Metall-Keramik-Bauteil nach den Ansprüchen 1 bis 3, dadurch gekennzeichnet, dass der Metallfilz aus X15 CrNi Si 2520 besteht.

## Claims

1. Metal-ceramic component consisting of a metal body and a ceramic body between which a metal felt is inserted and inseparably connected at the interfaces respectively with the metal body and with the ceramic body, the connection with the metal body being a soldered joint, characterised in that both the metal body and also the ceramic body are prefabricated components with an inherent rigidity and in that between the metal felt and the entire face of the ceramic body which is towards the metal felt there is a soldered connection, the solder in which has passed into a chemical compound with the ceramic material (active solder).

2. Metal-ceramic component according to claim 1, characterised in that it has a rotationally symmetrical form and is preferably constructed as a ceramic segment bearing or a shaft hub connection.

3. Ceramic segment bearing according to claim 2, characterised in that the metal felt ring has, distributed in a cross-sectional plane regularly over its periphery apertures into which is inserted the plug-like metal felt which is of considerably greater rigidity.

4. Metal-ceramic component according to claims 2 to 3, characterised in that the metal felt consists of X15 CrNi Si 2520.

## Revendications

1. Elément constitutif métal-céramique, constitué d'un corps métallique et d'un corps en céramique entre lesquels est inséré un feutre métallique qui est en liaison sur ses surfaces limites, de façon inséparable, avec, respectivement le corps métallique et le corps en céramique, la liaison par rapport au corps métallique étant une liaison par brasage, élément caractérisé en ce que le corps métallique aussi bien que le corps en céramique, sont des éléments constitutifs préfabriqués, présentant une rigidité qui leur est propre, tandis qu'entre le feutre métallique et l'ensemble de la surface du corps en céramique, en regard du feutre métallique, il y a une liaison par brasage, dont le métal d'apport est entré en combinaison chimique avec le matériau céramique (brasure active).

2. Elément constitutif métal-céramique selon la revendication 1, caractérisé en ce qu'il présente une symétrie de révolution et qu'il revêt, de préférence, la forme d'un palier à segments de céramique ou d'une liaison moyeuarbre.

3. Palier à segments de céramique selon la revendication 2, caractérisé en ce que l'anneau de feutre métallique comporte dans un plan de section transversale, des découpures uniformément réparties sur sa périphérie, dans les quelles est introduit, sous forme de gouttes, un feutre métallique d'une rigidité beaucoup plus élevée.

4. Elément constitutif métal-céramique, selon les revendications 1 à 3, caractérisé en ce que le feutre métallique est constitué de X15 Cr Ni Si 2520.

FIG.1

FIG.2